# FASCICULE DE BREVET EUROPEEN

(11) **EP 4 390 556 B1**
(45) Date de publication et mention de la délivrance du brevet: **27.05.2026**
(21) Numéro de dépôt: 22214742.3
(22) Date de dépôt: 19.12.2022
(51) Int. Cl.: G04B 15/14, C08L 67/02, F16H 55/00, G04B 13/02

(54) **PIECE MECANIQUE FONCTIONNELLE EN POLYFURANOATE D'ÉTHYLÈNE**
FUNKTIONELLES MECHANISCHES TEIL AUS POLYETHYLENFURANOAT
FUNCTIONAL MECHANICAL PART MADE OF POLYETHYLENE FURANOATE

(43) Date de publication de la demande: 26.06.2024
(73) Titulaire: The Swatch Group Research and Development Ltd, 2074 Marin (CH)
(72) Inventeur: VINCENT, Christophe, 25160 Montperreux (FR); CORNILLE, Adrien, 1584 Villars-Le-Grand (CH)
(74) Mandataire: ICB SA

(56) Documents cités:
- WO-A1-2021/048336
- US-A1- 2018 335 078
- ZORKO DAMIJAN ET AL: "An investigation on the potential of bio-based polymers for use in polymer gear transmissions", POLYMER TESTING, ELSEVIER, AMSTERDAM, NL, vol. 93, 30 November 2020 (2020-11-30), XP086416202, ISSN: 0142-9418, [retrieved on 20201130], DOI: 10.1016/J.POLYMERTESTING.2020.106994

## Description

### Domaine technique de l'invention

La présente invention se rapporte à une pièce mécanique d'un mouvement horloger comprenant une surface fonctionnelle destinée en utilisation à venir en contact de frottement avec une autre surface fonctionnelle.

### Arrière-plan technologique

Dans les années 70, Tissot présente l'Astrolon qui est la première montre en plastique avec des composants internes au mouvement dont notamment l'échappement à ancre suisse qui est en polymère. Le cahier des charges initial de cette montre est simple :
- Réduire le nombre de composants du mouvement,
- Supprimer la lubrification,
- Améliorer le processus de production.

Le procédé de fabrication est alors l'injection et les polymères de par leurs propriétés vont permettre de répondre à ces besoins et de produire cette montre. Le document CH 334708 décrit le procédé d'injection ainsi que la matière sélectionnée qui est un polyamide 66 (PA66).

Dans les années 2000, Swatch a présenté la Sistem51 qui repose sensiblement sur le même cahier des charges. Le procédé reste le même en ce qui concerne l'injection mais le polymère sélectionné est le polyoxyméthylène (POM). Une très fine lubrification de l'échappement permet au mouvement d'atteindre les performances demandées.

A ce jour, une amélioration des performances tribologiques est toujours recherchée. Par ailleurs, ces matériaux polymères, tels que le POM, connus pour leurs performances tribologiques présentent pour désavantages d'être d'origine pétrolière et peu recyclables.

### Résumé de l'invention

La présente invention a pour objet de trouver un matériau polymère présentant des performances tribologiques améliorées par rapport au POM.

La présente invention a en outre pour objet de trouver une alternative biosourcée, c.à.d. d'origine non pétrolière, aux matériaux couramment utilisés pour une application tribologique.

A cet effet, de nombreux tests ont mis en lumière un polymère qui est le polyfuranoate d'éthylène (PEF).

Plus précisément, la présente invention se rapporte à une pièce mécanique comprenant une surface fonctionnelle destinée à venir en contact de frottement avec une autre surface fonctionnelle, ladite au moins surface fonctionnelle de la pièce mécanique étant réalisée en polyfuranoate d'éthylène (PEF).

Le PEF possède des caractéristiques mécaniques proches du POM et est injectable comme ce dernier mais avec l'aspect biosourcé et recyclable en plus. Des essais tribologiques ont montré que l'utilisation du polymère PEF pour, entre autres, des pièces horlogères permet d'améliorer les performances en contact lubrifié avec une baisse du coefficient dynamique moyen de frottement par rapport au POM et ce sans altérer l'usure du contact.

Un autre aspect de l'invention concerne un ensemble fonctionnel comprenant la pièce mécanique telle que décrite précédemment et une autre pièce mécanique comprenant une surface fonctionnelle destinée à être en contact de frottement avec la surface fonctionnelle de ladite pièce mécanique, ledit ensemble étant caractérisé en ce qu'au moins la surface fonctionnelle de l'autre pièce est réalisée dans un matériau choisi parmi le polyfuranoate d'éthylène, le rubis et l'acier.

D'autres caractéristiques et avantages de l'invention apparaîtront à la lecture de la description détaillée qui va suivre, en référence aux dessins annexés.

### Brève description des figures

La figure 1 représente les courbes du coefficient de frottement dynamique moyen en fonction de la charge pour le couple PEF/PEF et le couple POM/POM.
La figure 2 représente les courbes du coefficient de frottement dynamique moyen en fonction de la charge pour le couple PEF/PEF, le couple PEF/rubis et le couple PEF/acier.
La figure 3 représente partiellement un ensemble fonctionnel comprenant deux pièces, à savoir une roue d'échappement et une palette d'ancre avec une roue réalisée en PEF selon l'invention.

### Description détaillée de l'invention

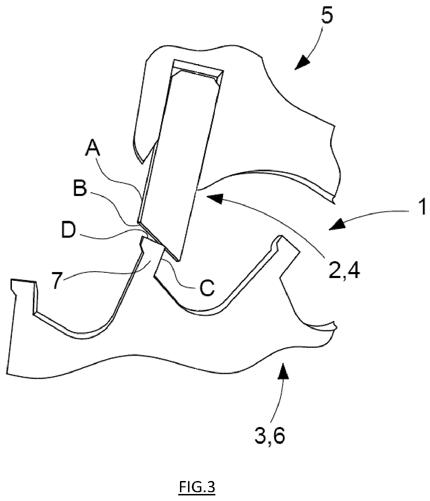

La présente invention se rapporte à une pièce mécanique d'un mouvement horloger, soumise sur une ou plusieurs de ses surfaces dites fonctionnelles ou de contact aux frottements avec une ou des surfaces fonctionnelles d'une autre pièce ou de la même pièce. La pièce mécanique peut être utilisée dans tout système où le frottement est un souci. Selon l'invention telle que définie par les revendications annexées, il s'agit d'une pièce mécanique d'un mouvement horloger. On peut citer comme pièce une palette, une roue d'échappement, un axe d'un mobile, un palier, un ressort de barillet ou encore des dentures de roues d'engrenage. Ladite pièce peut être en contact avec une autre pièce. A titre d'exemple, dans le domaine horloger, l'ensemble fonctionnel 1 visible à la figure 3 peut comporter une première pièce 2 qui est une palette 4 d'une ancre 5 et une deuxième pièce 3 qui est une roue d'échappement 6. Plus précisément, la palette 4 présente un plan de repos A et un plan d'impulsion B qui coopèrent avec les plans de repos C et d'impulsion D de la dent 7 de la roue d'échappement 6. Ces plans A, B, C, D sont des surfaces fonctionnelles fortement sollicitées et sujettes à des niveaux élevés de frottement et/ou contact requérant l'utilisation de matériaux particuliers pour réduire le frottement. Typiquement, au moins la roue est réalisée en PEF pour améliorer les performances tribologiques. En alternative, une surface fonctionnelle d'une pièce peut être en contact avec une autre surface fonctionnelle de cette même pièce. Par exemple, il peut s'agir d'un ressort de barillet formé d'une lame avec une face du ressort destinée à être en contact avec une autre face du ressort.

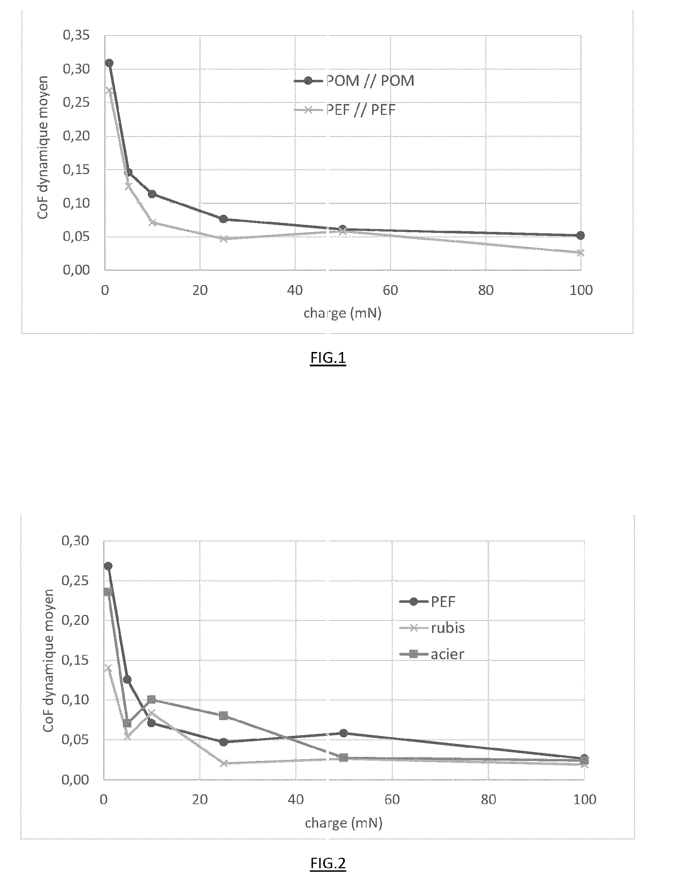

Selon l'invention, la pièce mécanique est au moins en partie réalisée en polyfuranoate d'éthylène (PEF). Ainsi, au moins la ou les surfaces fonctionnelles sont réalisées en PEF. De préférence, la pièce est réalisée en masse en PEF. Des tests tribologiques comparatifs avec le POM ont été réalisés avec les résultats présentés à la figure 1. Les tests ont été effectués avec un contact lubrifié avec une huile horlogère en utilisant un tribomètre bille/plan en mode linéaire alternatif avec une bille de 2 mm de diamètre, la bille et le plan étant réalisés en PEF pour un couple et en POM pour l'autre couple. Les essais ont été effectués avec une vitesse sinusoïdale maximale de 10 mm/s, une amplitude de 4 mm, un effort normal de 1, 5, 10, 25, 50 et 100 mN sur une distance de 15 m. Les charges ont été balayées sur une grande plage pour représenter les différents contacts possibles dans le mouvement et notamment l'évolution du contact de l'échappement lors des différentes phases de dégagement et d'impulsion.

On observe que le coefficient de frottement (CoF) du couple PEF/PEF est au moins équivalent si ce n'est inférieur à celui de la référence en POM. Dès lors que la charge est suffisante, l'huile permet d'abaisser le CoF a des valeurs extrêmement faibles qu'on retrouve généralement dans du frottement hydrodynamique. En utilisant du PEF, il est possible de baisser encore plus le CoF et d'obtenir des valeurs inférieures à 0.05. En outre, avec un coefficient de frottement amélioré, aucune péjoration de l'usure n'est à signaler.

En gardant les mêmes conditions d'essais, le frottement avec d'autres antagonistes typiques de l'horlogerie, à savoir le rubis et l'acier a été évalué avec la bille réalisée dans ces matériaux lors des tests. Les résultats sont présentés à la figure 2 avec comme comparatif le couple PEF/PEF. D'une manière générale, le CoF est encore plus faible car on limite les déformations élastiques de l'antagoniste ce qui permet de limiter les efforts de frottement. Les valeurs atteintes sont bien inférieures à 0.05 dans une plage de charges assez large. La dureté de ces antagonistes et l'utilisation d'une charge élevée ne détériorent pas le PEF et aucune usure n'est visible.

En conclusion, les résultats des essais tribologiques effectués sur des pièces réalisées en PEF sont au moins aussi bons que ceux effectués sur des pièces réalisées en POM.

## Revendications

1. Pièce mécanique (2,3) d'un mouvement horloger comprenant une surface fonctionnelle destinée à venir en contact de frottement avec une autre surface fonctionnelle, **caractérisée en ce qu'**au moins ladite surface fonctionnelle de la pièce mécanique (2,3) est réalisée en polyfuranoate d'éthylène.

2. Pièce mécanique (2,3) selon la revendication précédente, **caractérisée en ce que** toute la pièce mécanique (2,3) est réalisée en polyfuranoate d'éthylène.

3. Pièce mécanique (2,3) selon l'une des revendications précédentes, **caractérisée en ce qu'**il s'agit d'une pièce mécanique (2,3) choisie parmi une palette (4), une roue d'échappement (6), un axe d'un mobile, un palier, un ressort de barillet et des dentures de roues d'engrenage.

4. Ensemble fonctionnel (1) comprenant la pièce mécanique (2,3) selon l'une des revendications précédentes et une autre pièce mécanique comprenant l'autre surface fonctionnelle destinée à être en contact de frottement avec la surface fonctionnelle de ladite pièce mécanique (2,3), **caractérisé en ce qu'**au moins l'autre surface fonctionnelle de l'autre pièce mécanique est réalisée dans un matériau choisi parmi le polyfuranoate d'éthylène, le rubis et l'acier.

5. Ensemble fonctionnel (1) selon la revendication précédente, **caractérisé en ce que** le contact de frottement est lubrifié.

6. Ensemble fonctionnel (1) selon la revendication précédente, **caractérisé en ce que** le contact de frottement est lubrifié avec une huile.

## Patentansprüche

1. Mechanisches Bauteil (2,3) eines Uhrwerks mit einer Funktionsfläche, die dazu bestimmt ist, mit einer anderen Funktionsfläche in Reibungskontakt zu treten, **dadurch gekennzeichnet, dass** zumindest die genannte Funktionsfläche des mechanischen Bauteils (2,3) aus Ethylen-Polyfuranoat hergestellt ist.

2. Mechanisches Bauteil (2,3) nach dem vorstehenden Anspruch, **dadurch gekennzeichnet, dass** das gesamte mechanische Teil (2,3) aus Ethylen-Polyfuranoat hergestellt ist.

3. Mechanisches Bauteil (2,3) nach einem der vorstehenden Ansprüche, **dadurch gekennzeichnet, dass** es sich um ein mechanisches Bauteil (2,3) handelt, das aus einer Palette (4), einem Hemmungsrad (6), einer Achse eines Rads, einem Lager, einer Federhausfeder und Verzahnungen von Zahnrädern ausgewählt ist.

4. Funktionsbaugruppe (1), umfassend das mechanische Bauteil (2,3) nach einem der vorstehenden Ansprüche und ein weiteres mechanisches Teil, das die andere Funktionsfläche aufweist, die dazu bestimmt ist, in Reibungskontakt mit der Funktionsfläche des genannten mechanischen Bauteils (2,3) zu stehen, **dadurch gekennzeichnet, dass** zumindest die andere Funktionsfläche des anderen mechanischen Teils aus einem Material besteht, das aus Ethylen-Polyfuranoat, Rubin und Stahl ausgewählt ist.

5. Funktionsbaugruppe (1) nach dem vorstehenden Anspruch, **dadurch gekennzeichnet, dass** der Reibungskontakt geschmiert ist.

6. Funktionsbaugruppe (1) nach dem vorstehenden Anspruch, **dadurch gekennzeichnet, dass** der Reibungskontakt mit einem Öl geschmiert wird.

## Claims

1. Mechanical part (2, 3) of a horological movement, which part comprises a functional surface intended to come into frictional contact with another functional surface, **characterised in that** at least said functional surface of the mechanical part (2, 3) is made of polyethylene furanoate.

2. Mechanical part (2, 3) according to the preceding claim, **characterised in that** the entire mechanical part (2, 3) is made of polyethylene furanoate.

3. Mechanical part (2, 3) according to one of the preceding claims, **characterised in that** it is a mechanical part (2, 3) selected from a pallet (4), an escape wheel (6), an arbor of a wheel set, a bearing, a mainspring and toothings of gear wheels.

4. Functional assembly (1) comprising the mechanical part (2, 3) according to one of the preceding claims and another mechanical part comprising the other functional surface intended to be in frictional contact with the functional surface of said mechanical part (2, 3), **characterised in that** at least the other functional surface of the other mechanical part is made of a material selected from polyethylene furanoate, ruby and steel.

5. Functional assembly (1) according to the preceding claim, **characterised in that** the frictional contact is lubricated.

6. Functional assembly (1) according to the preceding claim, **characterised in that** the frictional contact is lubricated using an oil.
